(19) **Europäisches Patentamt**
**European Patent Office**
**Office européen des brevets**

(11) **EP 4 730 771 A1**

(12) **EUROPEAN PATENT APPLICATION**

(43) Date of publication:
**22.04.2026 Bulletin 2026/17**

(21) Application number: **24306760.0**

(22) Date of filing: **21.10.2024**

(51) International Patent Classification (IPC):
*H04N 19/105* (2014.01)    *H04N 19/11* (2014.01)
*H04N 19/117* (2014.01)    *H04N 19/159* (2014.01)
*H04N 19/176* (2014.01)    *H04N 19/463* (2014.01)
*H04N 19/593* (2014.01)    *H04N 19/70* (2014.01)

(52) Cooperative Patent Classification (CPC):
**H04N 19/105; H04N 19/11; H04N 19/117;**
**H04N 19/159; H04N 19/176; H04N 19/463;**
**H04N 19/593; H04N 19/70**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **RATH, Gagan Bihari**
  **35000 RENNES (FR)**
- **FRANCOIS, Edouard**
  **35890 BOURG DES COMPTES (FR)**
- **BORDES, Philippe**
  **35890 LAILLE (FR)**
- **URBAN, Fabrice**
  **35235 THORIGNE-FOUILLARD (FR)**

(74) Representative: **Vossius & Partner**
**Patentanwälte Rechtsanwälte mbB**
**Siebertstraße 3**
**81675 München (DE)**

(54) **INTRA PREDICTION WITH LINEAR SHIFT**

(57)    Systems, methods, and instrumentalities are disclosed herein for intra predictions with linear shifts. In examples, a video decoder may determine an intra prediction mode for a video block. The video decoder may determine whether to use an offset parameter associated with the intra prediction mode to predict the video block. The offset parameter associated with the intra prediction mode may be obtained based on a determination to use the offset parameter to predict the video block. A set of prediction samples for the video block may be determined based on the offset parameter and the intra prediction mode for the video block. The video block may be decoded using the set of prediction samples.

**FIG. 7**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed herein for intra predictions with linear shifts.

In examples, a video decoder may determine an intra prediction mode for a video block. The video decoder may determine whether to use an offset parameter associated with the intra prediction mode to predict the video block. The offset parameter associated with the intra prediction mode may be obtained based on a determination to use the offset parameter to predict the video block. A set of prediction samples for the video block may be determined based on the offset parameter and the intra prediction mode for the video block. The video block may be decoded using the set of prediction samples.

In examples, the intra prediction mode may be a directional intra prediction mode. The decoder may decode an indication that indicates whether the offset parameter is used to predict a picture comprising the video block. In examples, the indication may be a value of a syntax element. The determination of whether to use the offset parameter to predict the video block may be based on the indication. The decoder may determine that the intra prediction mode is a non-planar mode of a plurality of candidate modes in a most probable modes (MPM) list. The decoder may determine that a size of the video block is equal to or greater than a threshold block size. In examples, the indication (e.g., the value of the syntax element) may be decoded based on the determination that the intra prediction mode is the non-planar mode of the plurality of candidate modes in the MPM list and may be based on the determination that the size of the video block is equal to or greater than the threshold block size.

In examples, the video block may be a first video block in a first picture, the intra prediction mode may be a first intra prediction mode, the offset parameter may be a first offset parameter, and the set of prediction samples may be a first set of prediction samples. The decoder may determine that multiple reference line (MRL) is enabled for a second video block. The decoder may determine that the second video block is associated with a reference line. Based on an index of the reference line, a second set of prediction samples for the second video block may be obtained based on a second intra prediction mode that is not associated with a second offset parameter. The second video block may be decoded using the second set of prediction samples. In examples, the decoder may determine that intra subblock partitioning (ISP) is enabled for a second video block of a second picture. A sub-partition associated with the second video block may be obtained via ISP. Based on the determination that ISP is enabled for the second video block, a second set of prediction samples for the sub-partition may be obtained based on a second intra prediction mode that is not associated with a second offset parameter. The sub-partition may be predicted using the second set of prediction samples for the sub-partition.

In examples, the decoder may determine a reference location based on the intra prediction mode and the offset parameter. Based on the reference location, the decoder may determine that an interpolation is to be used to obtain an interpolated reference sample associated with the reference location. The interpolated reference sample may be determined based on a cubic filter and a plurality of reference samples associated with video block. In examples, the decoder may determine that multiple reference line (MRL) is enabled for the video block. The decoder may determine that the video block is associated with a reference line. Based on an index of the reference line, the set of prediction samples for the video block may be obtained based on the intra prediction mode and the offset parameter.

In examples, the decoder may determine that the intra prediction mode is a positive intra prediction mode. The decoder may refrain from performing position dependent prediction compensation (PDPC) for the video block.

In examples, a video encoder may obtain an intra prediction mode for a video block. An offset parameter associated with the intra prediction mode may be obtained. The encoder may determine a set of prediction samples for the video block based on the offset parameter and the intra prediction mode for the video block. The video block may be predicted using the set of prediction samples. The encoder may determine whether to use the offset parameter associated with the intra prediction mode to encode the video block based on the prediction of the video block. An indication (e.g., a value of a syntax element) may be sent that indicates whether to use the offset parameter associated with the intra prediction mode to decode the video block.

In examples, the video block may be a first video block in a first picture, the intra prediction mode may be a first intra prediction mode, the offset parameter may be a first offset parameter, and the set of prediction samples may be a first set of prediction samples. The encoder may determine that intra subblock partitioning (ISP) is enabled for a second video block of a second picture. A sub-partition associated with the second video block may be obtained. Based on the determination that ISP is enabled for the second video block, a second set of prediction samples may be obtained for the sub-partition based on a second intra prediction mode that is not associated with a second offset parameter. The encoder may predict the sub-partition using the second set of prediction samples for the sub-partition.

In examples, the encoder may determine that the intra prediction mode is a positive intra prediction mode. The encoder may refrain from performing position dependent prediction compensation (PDPC) for the video block.

In examples, the value of the offset parameter may vary based on at least one of a size of the video block or a maximum variation of directionality associated with intra prediction mode.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of reference samples on a reference line.
FIG. 5 shows an example interpolation of predictor samples.
FIG. 6 shows an example of normal directional intra prediction.
FIG. 7 shows an example of modified directional intra prediction with an offset (e.g., a pre-defined shift b).
FIG. 8 shows an example of modified directional intra prediction with a pre-defined positive shift value b.
FIG. 9 shows an example of modified directional intra prediction with a pre-defined negative shift value b.
FIG. 10 shows an example of reference samples ref0 used to perform prediction of a neighbor block of a current block.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

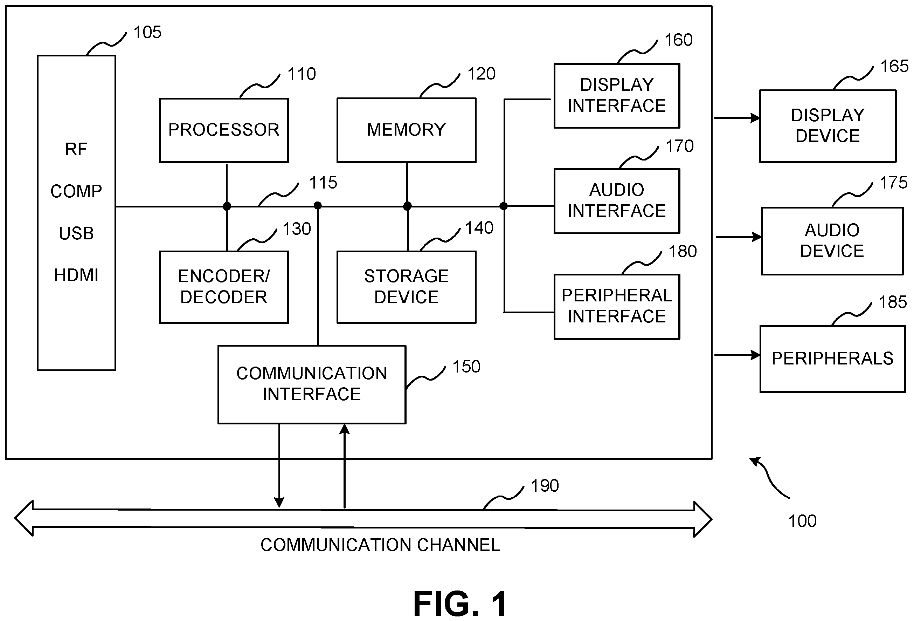

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

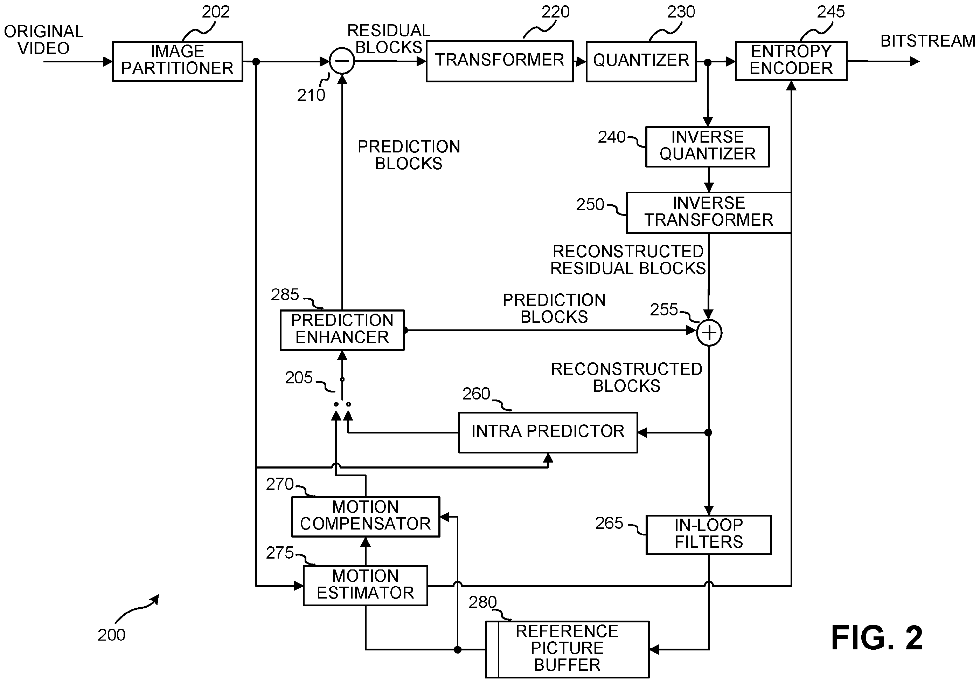

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

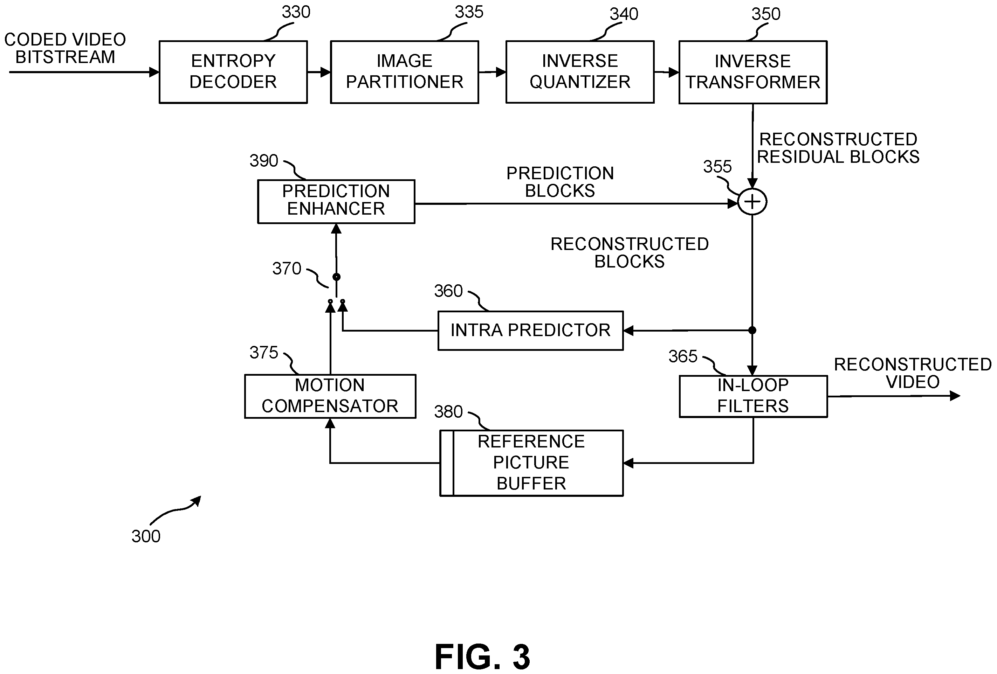

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $Cb, Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. Video data (e.g., a bitstream) that may include one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

Systems, methods, and instrumentalities are disclosed herein for intra predictions with linear shifts.

In examples, a video decoder may determine an intra prediction mode for a video block. The video decoder may determine whether to use an offset parameter associated with the intra prediction mode to predict the video block. The offset parameter associated with the intra prediction mode may be obtained based on a determination to use the offset parameter to predict the video block. A set of prediction samples for the video block may be determined based on the offset parameter and the intra prediction mode for the video block. The video block may be decoded using the set of prediction samples.

In examples, the intra prediction mode may be a directional intra prediction mode. The decoder may decode an indication that indicates whether the offset parameter is used to predict a picture comprising the video block. In examples, the indication may be a value of a syntax element. The determination of whether to use the offset parameter to predict the video block may be based on the indication. The decoder may determine that the intra prediction mode is a non-planar mode of a plurality of candidate modes in a most probable modes (MPM) list. The decoder may determine that a size of the video block is equal to or greater than a threshold block size. In examples, the indication (e.g., the value of the syntax element) may be decoded based on the determination that the intra prediction mode is the non-planar mode of the plurality of candidate modes in the MPM list and may be based on the determination that the size of the video block is equal to or greater than the threshold block size.

In examples, the video block may be a first video block in a first picture, the intra prediction mode may be a first intra prediction mode, the offset parameter may be a first offset parameter, and the set of prediction samples may be a first set of prediction samples. The decoder may determine that multiple reference line (MRL) is enabled for a second video block. The decoder may determine that the second video block is associated with a reference line. Based on an index of the reference line, a second set of prediction samples for the second video block may be obtained based on a second intra prediction mode that is not associated with a second offset parameter. The second video block may be decoded using the second set of prediction samples. In examples, the decoder may determine that intra subblock partitioning (ISP) is enabled for a second video block of a second picture. A sub-partition associated with the second video block may be obtained via ISP. Based on the determination that ISP is enabled for the second video block, a second set of prediction samples for the sub-partition may be obtained based on a second intra prediction mode that is not associated with a second offset parameter. The sub-partition may be predicted using the second set of prediction samples for the sub-partition.

In examples, the decoder may determine a reference location based on the intra prediction mode and the offset parameter. Based on the reference location, the decoder may determine that an interpolation is to be used to obtain an interpolated reference sample associated with the reference location. The interpolated reference sample may be determined based on a cubic filter and a plurality of reference samples associated with video block. In examples, the decoder may determine that multiple reference line (MRL) is enabled for the video block. The decoder may determine that the video block is associated with a reference line. Based on an index of the reference line, the set of prediction samples for the video block may be obtained based on the intra prediction mode and the offset parameter.

In examples, the decoder may determine that the intra prediction mode is a positive intra prediction mode. The decoder may refrain from performing position dependent prediction compensation (PDPC) for the video block.

In examples, a video encoder may obtain an intra prediction mode for a video block. An offset parameter associated with the intra prediction mode may be obtained. The encoder may determine a set of prediction samples for the video block based on the offset parameter and the intra prediction mode for the video block. The video block may be predicted using the set of prediction samples. The encoder may determine whether to use the offset parameter associated with the intra prediction mode to encode the video block based on the prediction of the video block. An indication (e.g., a value of a syntax element) may be sent that indicates whether to use the offset parameter associated with the intra prediction mode to decode the video block.

In examples, the video block may be a first video block in a first picture, the intra prediction mode may be a first intra prediction mode, the offset parameter may be a first offset parameter, and the set of prediction samples may be a first set of prediction samples. The encoder may determine that intra subblock partitioning (ISP) is enabled for a second video block of a second picture. A sub-partition associated with the second video block may be obtained. Based on the determination that ISP is enabled for the second video block, a second set of prediction samples may be obtained for the sub-partition based on a second intra prediction mode that is not associated with a second offset parameter. The encoder may predict the sub-partition using the second set of prediction samples for the sub-partition.

In examples, the encoder may determine that the intra prediction mode is a positive intra prediction mode. The encoder may refrain from performing position dependent prediction compensation (PDPC) for the video block.

In examples, the value of the offset parameter may vary based on at least one of a size of the video block or a maximum variation of directionality associated with intra prediction mode.

Target blocks in intra prediction may have one or more prediction modes. For the directional prediction modes, the pixels (e.g., all the pixels) in a target block may be predicted along the same prediction direction. There may be natural imageries which may not be modeled efficiently by constant prediction direction models (e.g., especially if the target block sizes are large). In these cases, using the constant prediction direction model may perform an inefficient prediction and/or may partition a larger block into many smaller blocks. The encoder may choose to encode the block with decoder intra mode derivation (DIMD), template-based intra mode derivation (TIMD), template-based multiple reference line (TMRL), or spatial geometric partitioning mode (SGPM). The encoder may construct the final prediction by blending unidirectional predictions. In examples herein, a linear shift model may be used to improve the coding efficiency of larger blocks (e.g., if the larger blocks cannot be modeled well with directional modes).

In examples, intra prediction directions may be modeled with an angle and an offset. The angle may be an angle parameter of a directional mode and the offset may be a preset constant value. In examples, intra prediction may have the offset value equal to zero. The offset value may be a constant for prediction directions (e.g., all prediction directions) or may be a function of the prediction direction. The encoder may use bits (e.g., additional bits) to indicate if the final prediction is obtained without or with the associated offset value. The encoder may transmit bits (e.g., further bits) to indicate the offset value used in the final prediction (e.g., if multiple offsets are allowed with a mode). To limit the additional signaling, directional modes in the most probable mode (MPM) list (e.g., only directional modes in the MPM list) may be used.

Intra prediction may be applied in all-intra frames. Intra prediction may (e.g., may also) be applied in intra blocks in inter frames, where a target block (e.g., target coding unit (CU)) may be spatially predicted from the causal neighbor blocks in the same frame (e.g., the blocks on the top and top-right, the blocks on the left and left-bottom, and the top-left block). Based on the decoded pixel values in these blocks, the encoder may construct different predictions for the target block and choose the one that leads to the best rate-distortion (RD) performance. In examples, the predictions may be tested for 67 prediction modes. The prediction modes may include one planar mode (e.g., indexed as mode 0), one DC mode (e.g., indexed as mode 1), and 65 remaining angular modes. In examples, the encoder may (e.g., may also) check for predictions with DIMD, TIMD, TMRL, SGPM, IntraTmp, etc., besides the 67 prediction modes to choose the best prediction for a target block. In DIMD, TIMD, TMRL, and SGPM, the final prediction may be obtained as a weighted sum of predictions of directional or non-directional modes.

Directional predictions (e.g., each directional prediction) may be obtained (e.g., if there is a single prediction or a blending or predictions) by predicting pixels (e.g., all pixels) in a target block in the direction associated with the mode. A prediction direction may have correspondence with the orientation of underlying object structures. The prediction directions may include the full range of angles in the left and on the top of a current block, where the decoded causal blocks may be located. In examples, the underlying structures may not have purely directional orientations. In those cases, intra prediction with directional modes may be inefficient, and may lead to many smaller size blocks resulting in more signaling overhead.

In examples, prediction may be performed with several directional modes. The predictions may be blended with suitable weights to arrive at the final prediction. As signaling multiple prediction modes may require significant overhead, this approach may be performed using a backward encoding technique where the prediction modes may be estimated from already decoded samples on the left and top of a current block. This may be how intra prediction is performed using DIMD, TIMD, TMRL, SGPM modes, where different techniques may be employed to estimate multiple prediction modes for a target block from already decoded sample values. Encoding a block with any of these tools may add complexity at the decoder as the decoder may have to estimate the required prediction modes using the same techniques as the encoder. A forward prediction technique may be used that can model multiple close directionalities without requiring a significant overhead. In examples, intra prediction models with an angle and an offset may be included. The offset may change the directionalities at target pixels in a current block (e.g., in the same current block).

Examples of directional intra prediction techniques are provided herein. 65 angular prediction modes may be used for intra prediction of any target block. The modes may be associated with prediction directions ranging from 45 degrees to -135 degrees in a clockwise manner. Depending on the block shape, some angular modes may be replaced with an equal number of wide angular modes defined beyond the above range. The modes may be termed horizontal if they refer to the directions below the diagonal direction (e.g., from top left towards bottom right). Otherwise, the modes may be termed vertical. The modes may be (e.g., may be further) referred to as positive or negative depending on which side of the purely horizontal (e.g., below or above purely horizontal) or purely vertical (e.g., to the right or left of the purely vertical) direction they belong to. The directions below and including purely horizontal, and to the right of and including purely vertical, may be referred to as positive directions. The remaining directions may be referred to as negative directions.

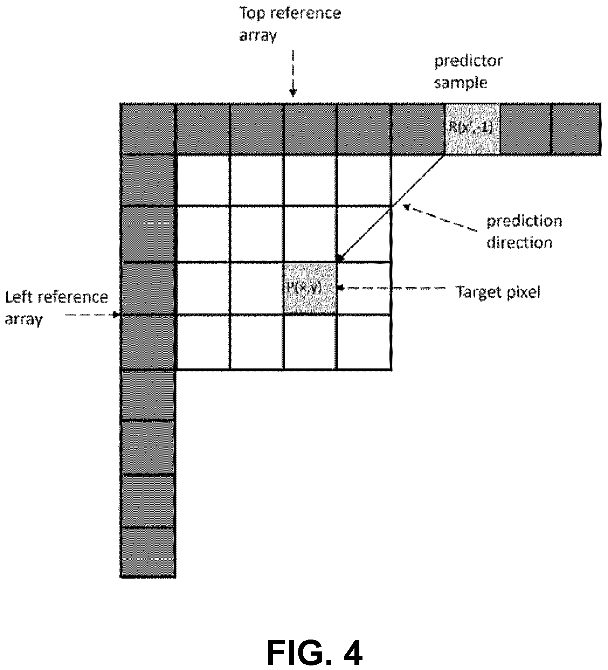

FIG. 4 shows an example of reference samples on a reference line. As shown in FIG. 4, for a target block with width W pixels and height H pixels, the top reference array may have 2W+1 samples and the left reference array may have 2H+1 samples. For a given target block to be intra predicted, the encoder or decoder may (e.g., may first) construct two reference arrays (e.g., one on the top and the other on the left of the target block). The reference samples may be taken from the decoded samples on the top, top-right, left, left-bottom and top-left decoded blocks. If some of the samples on the top or the left are not available (e.g., because of the corresponding coding units (CUs) not being in the same slice, or the current CU being at a frame boundary, etc.), then reference sample substitution may be performed. In reference sample substitution, the missing samples may be copied from the available samples in a clock-wise direction. Depending on the block size and the prediction mode, the reference samples may (e.g., may then) be filtered with the low-pass filter [1 2 1]/4. The reference samples may be filtered if the prediction mode is planar and the block size is greater than or equal to 8x8, or if the block size is greater than 4x4 and the prediction mode has integer slope. The prediction mode may have integer slope if the absolute value of the angle parameter predIntraAngle is a multiple of 32 (e.g., the predictor samples are at integer positions for all target pixels). If the prediction mode does not have integer slope but satisfies the filtering condition, then a flag called interpolation Flag may be enabled. The value of the interpolation Flag may decide if the prediction mode uses a cubic filter or a smoothing filter during the interpolation. If the interpolationFlag is enabled, a smoothing filter may be used. If the interpolation Flag is not enabled, a cubic filter may be used. For the chroma signals, the reference samples may not be filtered at all. Predictions based on multiple reference lines (MRL) may be provided. Besides the first reference line, which may or may not be filtered depending on the target block size and the prediction direction, none of the other reference lines may be filtered. The prediction with any reference line other than the first one (e.g., the reference line index multiRefIdx > 0) may use a cubic filter for interpolation.

For any target pixel, the reference sample may be referred to as its predictor. If the prediction mode has integer slope, then the predictor for target pixels (e.g., every target pixel) may coincide with a reference sample. In this case, the corresponding reference sample may be used as the predictor as it is (e.g., without interpolation filtering). For other angular prediction modes (e.g., all other angular prediction modes) (e.g., for a luma signal), the nearest six reference samples of the predictor may be used for interpolating the predictor.

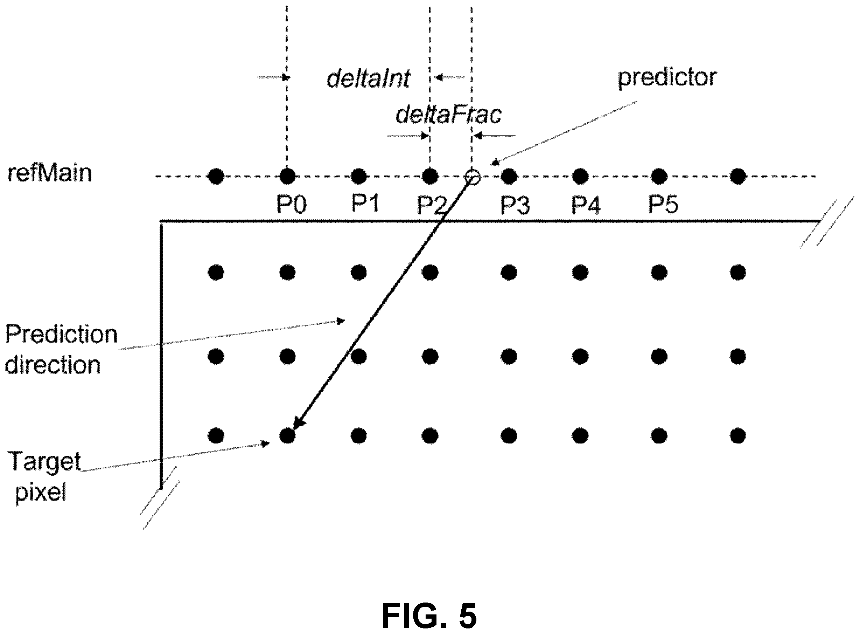

FIG. 5 shows an example interpolation of predictor samples. As shown in FIG. 5, the interpolation filter may be a 6-tap cubic filter or a smoothing filter depending on the value of the interpolation Flag. P0, $P1$, $P2$, $P3$, $P4$, and $P5$ may denote the six reference samples nearest to the predictor sample for the target pixel at $(x, y)$, $0 \leq x < W$, $0 \leq y < H$. $W$ and $H$ may be the width and height of the block, as shown in FIG. 5. They may be determined as follows. First, the integral and the fractional parts of the position of the predictor on the main reference array, that is *refMain,* may be determined. Denoting the horizontal offset of the predictor's position from the target pixel at (*x, y*) as *deltaPos,* its integral and fractional parts *deltaInt* and *deltaFrac* may be computed as:

$$deltaPos \; = \; (1 + y + multiRefIdx) \; * \; A \;.................................................(1)$$

$$deltaInt \; = \; deltaPos \; >> \; 5;.......................................(2)$$

$$deltraFrac \; = \; deltaPos \; \& \; 31;.......................................(3)$$

where *A* may represent a predIntraAngle value. If *deltaPos* is defined at a resolution of (1/32) of a pixel, *deltaInt* may determine the position of the nearest reference sample on the left (e.g., *P*2) and *deltaFrac* may denote the distance of the predictor from *P*2 at resolution (1/32).

With template based intra prediction and fusion (e.g., TIMD), a resolution of (1/64) of a pixel may be allowed. That may lead to 129 angular directions. In this case, *deltaInt* and *deltaFrac* may be computed as:

$$deltaInt \; = \; deltaPos \; >> \; 6; \;.............................................(4)$$

$$deltraFrac \; = \; deltaPos \; \& \; 63;................................................(5)$$

In either case, since *refMain*[0] points to the first reference sample on the top-left the target block and the *x*-cordinate of the target block starts at *x* = 0, the six nearest reference samples to the predictor sample may be identified (e.g., as shown in FIG. 5) as:

$$P0 \; \equiv \; refMain[x + deltaInt - 1],$$

$$P1 \; \equiv \; refMain[x + deltaInt],$$

$$P2 \; \equiv \; refMain[x + deltaInt \; + \; 1],$$

$$P3 \; \equiv refMain[x + deltaInt \; + 2],$$

$$P4 \; \equiv refMain[x + deltaInt \; + 3],$$

$$P5 \; \equiv refMain[x + deltaInt \; + 4],$$

The predictor value may be computed as:

$$P_{pred}(x, y) \; = \; (f[0] \; * \; P0 + \; f[1] \; * \; P1 \; +$$

$$f[2] \; * \; P2 \; + \; f[3] \; * \; P3 \; + \; f[4] \; * \; P4 \; + \; f[5] \; * \; P5 + \; 128) \; >> \; 8$$

$$.................................................................................................................... \; (6)$$

where *f*[i] may denote the ith filter coefficient and P0-P5 may represent the nearest 6 reference samples to the predictor (e.g., as shown in FIG. 5). The filter coefficients *f*[*i*], *i* = 0,1,2,3,4,5 may be normalized with integral values so that their sum is equal to 256. The chosen filter may depend on the value of the flag interpolation Flag, which may be decided based on the block size and prediction direction. If interpolation Flag is enabled, then a smoothing filter may be used. If interpolation Flag is not enabled, a cubic filter may be used. The smoothing filter or the cubic filter may depend on the parameter *deltraFrac*. As there may be 32 (64 with TIMD and TMRL) values of *deltraFrac* with an angle resolution 1/32 (1/64), there may be 32 (64) smoothing filters and 32 (64) cubic filters. As the specified cubic filters may have both negative and positive coefficient values, a clipping operation may be performed (e.g., additionally performed) to keep the predicted value within the valid dynamic range of the luma component:

$P_{pred}(x,y) = Clip((f[0] * P0 + f[1] * P1 + f[2] * P2 + f[3] * P3 + f[4] * P4 + f[5] * P5 + 128) >> 8)$ (7)

For a chroma target block, the two nearest references samples (e.g., only the two nearest reference samples) *P*2 and *P*3 may be used for interpolating the predictor value. The predictor value may be linearly interpolated as follows:

$$P_{pred}(x, y) = ((32 - deltaFrac) * P2 + deltaFrac * P3 + 16) >> 5;$$

..................................... (8)

where, *deltaFrac, deltaFrac* $\in \{0,1,2 ... 31\}$ may denote the distance of the predictor sample from *P*2.

For positive prediction directions, including the purely vertical and horizontal directions, the initial prediction values obtained may be followed by position dependent prediction combination (PDPC) to smooth out discontinuities at the block boundaries.

The prediction direction in a current block may be defined by the parameter predIntraAngle. Thus, the pixels (e.g., all the pixels) in the block may have the same prediction direction. As shown in Eqn(1), the predictor for the pixel at (x,y) may be localized by computing its horizontal displacement as:

$$deltaPos = (1 + y + multiRefIdx) * A$$

Since it is a function of the row index y, it may be equivalently expressed as:

$$deltaPos(y) = (1 + y + multiRefIdx) * A$$

Thus, the prediction directions for pixels (e.g., all pixels) in a target block may be the same. The prediction direction may be modeled such that the horizontal displacement is calculated as:

$$deltaPos(y) = (1 + y + multiRefIdx) * A + b ...................................... (9)$$

where the constant *b* may denote a pre-defined shift.

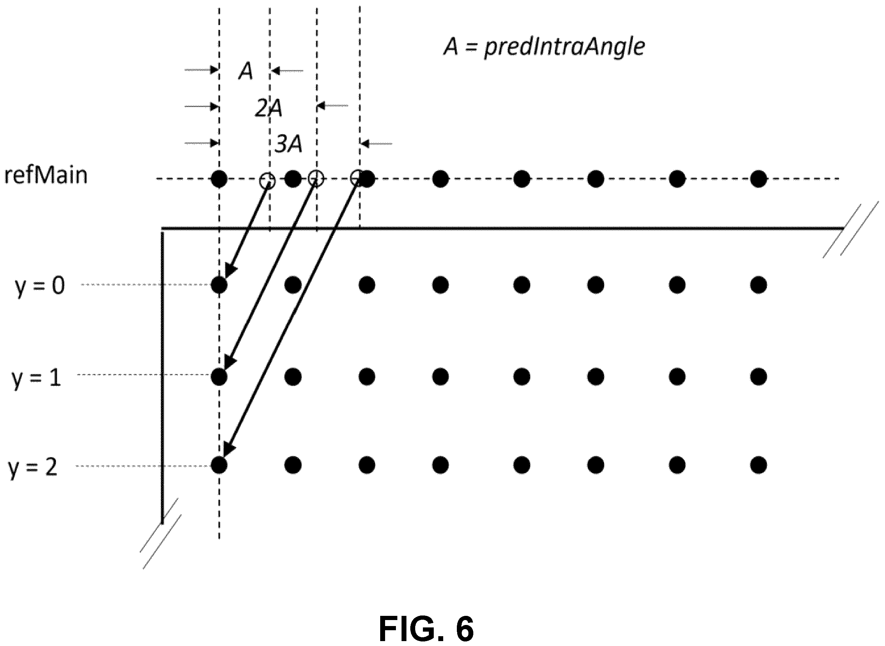

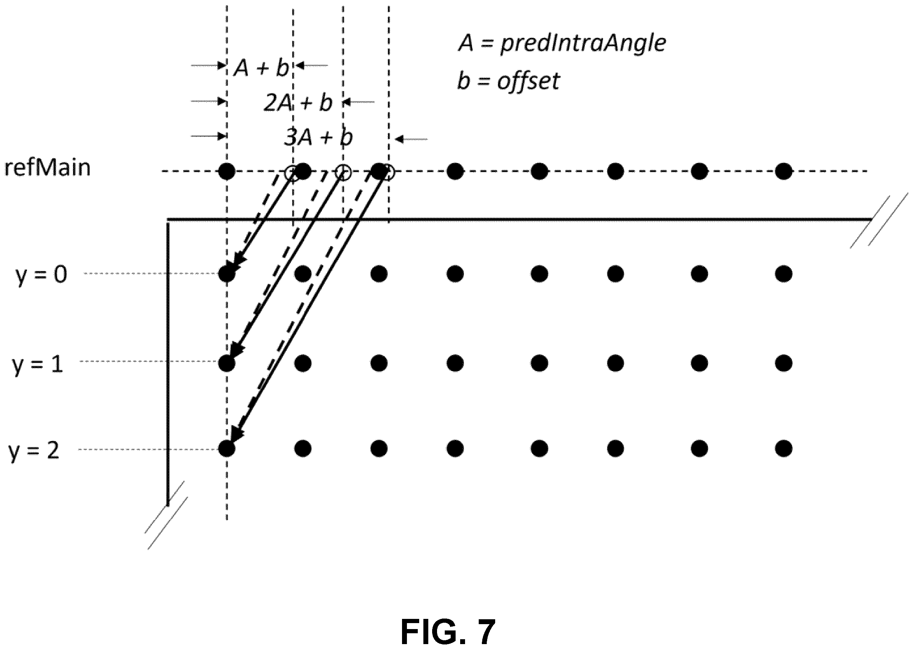

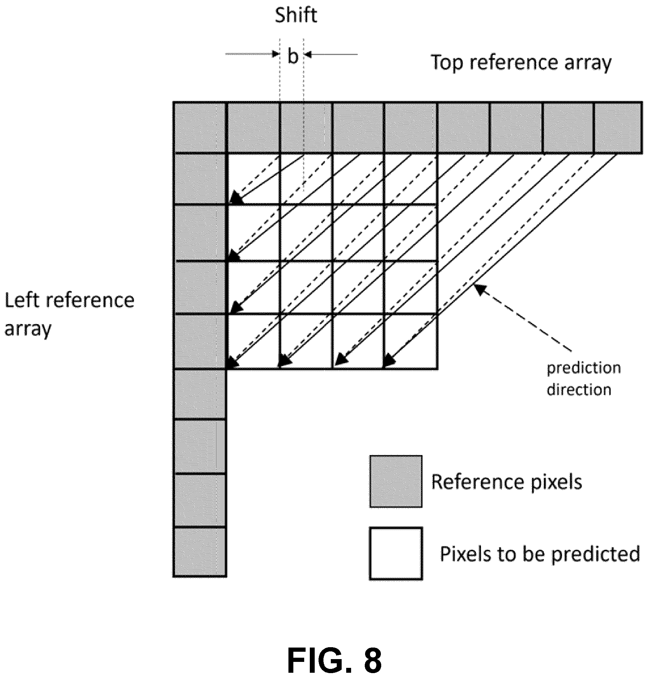

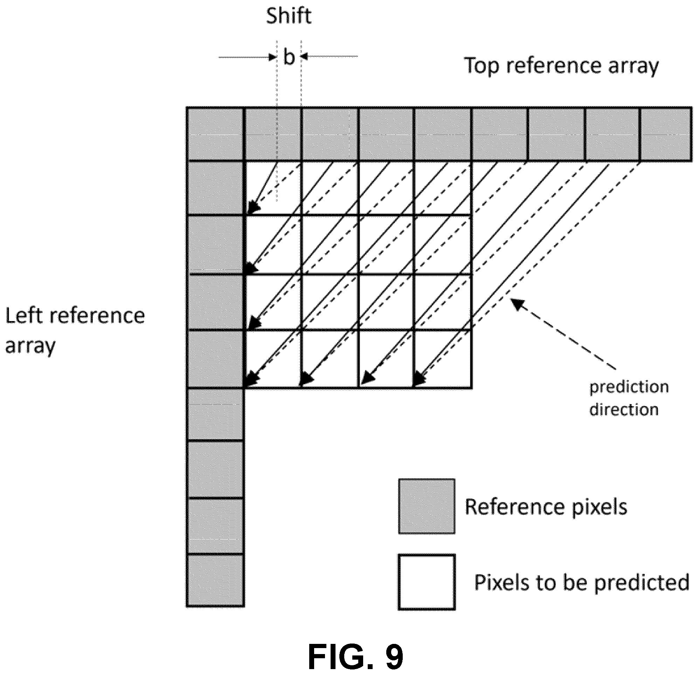

FIG. 6 shows an example of normal directional intra prediction. FIG. 7 shows an example of modified directional intra prediction with an offset (e.g., a pre-defined shift b). FIG. 8 shows an example of modified directional intra prediction with a pre-defined positive shift value b (normal directions are indicated in dashed lines, while modified directions are full arrows). FIG. 9 shows an example of modified directional intra prediction with a pre-defined negative shift value b (normal directions are indicated in dashed lines, while modified directions are full arrows).

The offset parameter *b* may be a very small number (e.g., 1 or 2) to model small changes in directionality. The offset parameter may be either positive or negative denoting a shift towards the right or left of the original predictors (e.g., as shown in FIG. 8 and FIG. 9).

Incorporation of this offset may render prediction directions at target pixels non-parallel. If *multiRefIdx* value is zero (e.g., the reference arrays are adjacent to the target block on top and on left), the horizontal offset for the pixels on the first row (y = 0) may be given as:

$$deltaPos(0) = A + b$$

The horizontal offset for the pixels on the second row (y = 1) may be given as:

$$deltaPos(1) = 2A + b$$

As 2*A* + *b* ≠ 2(*A* + *b),* for *b* ≠ 0, the prediction directions for pixels on the first two rows may not be parallel. The prediction directions for the pixels on any two rows may not be parallel. However, as the row index becomes larger and larger, the predictions directions may tend to be parallel as the effect of the offset may wear out.

The offset may be chosen as a function of the prediction direction itself (e.g., instead of being a constant value). That is, *b* = *f(A).* If *b* = *kA,* for some scalar *k,* the predictor may have the following horizontal shift:

$$deltaPos(y) = (1 + y + multiRefIdx) * A + kA = (1 + y + k + multiRefIdx) * A \qquad (10)$$

The prediction on a row may become equal to the original prediction on another row at distance $k$. For example, if $k$ = 1, the prediction on the first row may become equal to the original prediction on the second row, the prediction on the second row may become equal to the original prediction on the third row, and so on. If $k$ = -1, the prediction on the first row may become equal to the adjacent reference samples on the main array refMain, the prediction on the second row may become equal to the original prediction on the first row, and so on.

In examples, the offset may be a function of the target pixel coordinates (x, y), in which case the predictor's shift from the target pixel may be given as:

$$deltaPos(x, y) = (1 + y + multiRefIdx) * A + b(x, y)\ldots\ldots\ldots\ldots\ldots\ldots\ldots\ldots(11)$$

This may demand careful design of the offset function $b(x, y)$, such that the predictor samples for target pixels on any row or column may not overlap.

Making b dependent on (x,y) may allow accentuating the non-parallelism of directions from lines to lines/columns to columns. For example, considering prediction from reference samples on the top of the current block, b(x,y) may be defined as (b0 + a0*y), where a0 and b0 may be predefined parameters or may be parameters signaled in the bitstream (e.g., at the sequence, picture, slice, or CU level). Considering prediction from reference samples on the left of the current block, b(x,y) may be defined as (b0 + a0*x), where a0 and b0 may be predefined parameters or may be parameters signaled in the bitstream (e.g., at the sequence, picture, slice, or CU level).

Examples herein may apply (e.g., may only apply) to luma blocks. The chroma blocks may be predicted using different techniques.

In examples, predictions with intra directional modes (e.g., for all intra directional modes) in the MPM list may be obtained for a current block. The current block may have a size greater than or equal to some minimum threshold size (e.g., 16x16). The prediction techniques may be disabled for intra prediction with sub-partitions (e.g., predictions with offsets may be enabled only with intra subblock partitioning (ISP) type = NONE, that is, there may be neither horizontal nor vertical splits in sub-partitions), and for predictions with reference lines with index greater than 0 (e.g., predictions with offsets may be enabled only with the first reference line, that is, multiRefIdx = 0). The offset parameter value may be chosen to be a constant value (e.g., 1 or 2), which may be designed based on the block size and some assumed maximum variation of directionality. A predShiftFlag may be signaled to indicate the usage of the prediction model. The encoder may encode the flag as 0 or 1 with context, depending on if the normal prediction or the prediction with offset, respectively, results in the best prediction for a current block. To limit the signaling overhead, the predShiftFlag may only be signaled for the directional modes in the MPM list. The offset parameter value may be signaled in the slice or picture or sequence header. The decoder may decode the predShiftFlag if the block size is at least of minimum size and if the prediction mode belongs to the non-planar modes in the MPM list. Based on the decoded value, the decoder may (e.g., may then) decide to perform the prediction with offset with the decoded mode.

In examples, the predictor sample interpolation may be obtained by filtering the necessary reference samples with a cubic filter (e.g., instead of deciding the filter with the interpolationFlag).

In examples, MRL may be supported. The predictions with offsets may be extended to include reference lines with an index greater than 0.

In examples, PDPC may not be applied after the predictions with offsets (e.g., even if the prediction direction is positive).

In examples, an offset value may depend on the prediction direction. For example, the offset may be 1 for regular angles and may be 2 for wide angles. In examples, the offset may be 1 for positive angles and may be -1 for negative angles, or vice versa. In examples, the offset may be derived as a linear function of the column (row) index for vertical (horizontal) directions.

In examples, two offset values may be allowed for a prediction with offset. In this case, the predShiftFlag may be encoded with two bits, where the first bit may indicate if to use an offset, and the second bit may indicate which offset value to use if the first bit is 1. Both bits may be context-encoded.

In examples, the list of eligible modes for prediction with offset may be restricted (e.g., further restricted) to the first two or three modes after the first mode in the MPM list (e.g., which may be the planar mode).

In examples, predictions for intra directional modes (e.g., all intra directional modes) may be obtained for a current block. The current block may be of a size greater than or equal to some threshold value (e.g., 16x16). The prediction techniques may be disabled for intra prediction with sub-partitions (e.g., ISP Type = NONE, that is there may be neither horizontal or vertical splits in subpartitions) and for predictions with reference lines with index greater than 0 (multiRefIdx = 0). The offset parameter value may be chosen to be a constant value (e.g., 1 or 2), which may be designed based on the block size and some assumed maximum variation of directionality. Using the normal prediction or the prediction with a shift may be inferred (e.g., instead of based on the predShiftFlag) after predicting a template. The template may include some already decoded samples on the top and the left of a current block. The encoder and decoder may use identical templates to decide if to use the normal prediction or the prediction with an offset. The value of the offset from a limited set, for example (-1,1,-2,2), may be deduced by using the same template. In this case, the encoder may not encode any additional flags. Any of the examples described herein may be combined with this technique.

In examples, the decision to use the prediction with offset may be encoded in a slice/picture/sequence header to inform the decoder if the technique is applied in a slice/picture/sequence.

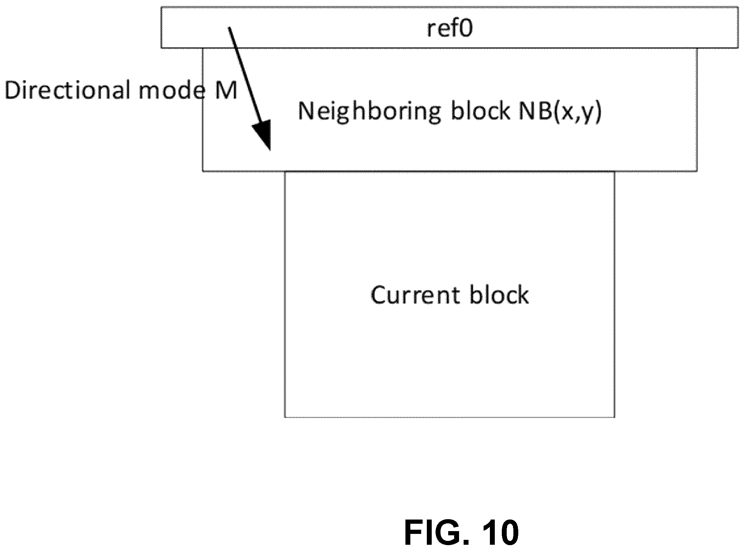

FIG. 10 shows an example of reference samples ref0 used to perform prediction of a neighbor block of a current block. Parameters related to the offset (e.g., b, or (a0,b0)) may be estimated from reconstructed samples neighboring the current block. For example, given the current block, and that the current considered directional mode M may use samples from the top of the current block, a neighboring block NB(x,y) on the top of the current block may be considered and a set of reference samples on the top of the neighboring block (ref0) may be considered (e.g., as shown in FIG. 10). The parameter b may be computed to minimize a distortion metric computed by applying the prediction of the neighboring block and using the directional mode M, based on the reference samples ref0, as follows:

$$\hat{b} = Min_b(dist(pred(M,b),NB)$$

The optimal value $\hat{b}$ may be used to perform the prediction of the current block from reference samples of the current block.

The distortion may be the sum of square errors between the predicted samples using mode M, offset b, pred(M,b) (x,y), and the reconstructed samples NB(x,y), as follows:

$$dist(pred(M,b),NB) = \sum_{(x,y)} (pred(M,b)(x,y) - NB(x,y))^2$$

Intra prediction models with an offset of predictor samples may help to model intra prediction directions in large blocks where directionality (e.g., perfect directionality) may not be valid. The proposed techniques may model the object directionalities better, which may lead to better compression. The proposed techniques may not require any additional complexity in obtaining the intra prediction of a current block.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device for video decoding, comprising:
   a processor configured to:

   determine an intra prediction mode for a video block;
   determine whether to use an offset parameter associated with the intra prediction mode to predict the video block;
   obtain the offset parameter associated with the intra prediction mode based on a determination to use the offset parameter to predict the video block;
   determine a set of prediction samples for the video block based on the offset parameter and the intra prediction mode for the video block; and
   decode the video block using the set of prediction samples.

2. A device for video encoding, comprising:
   a processor configured to:

obtain an intra prediction mode for a video block;

obtain an offset parameter associated with the intra prediction mode;

determine a set of prediction samples for the video block based on the offset parameter and the intra prediction mode for the video block;

predict the video block using the set of prediction samples;

determine whether to use the offset parameter associated with the intra prediction mode to encode the video block based on the prediction of the video block; and

send an indication that indicates whether to use the offset parameter associated with the intra prediction mode to decode the video block.

3. The device of claim 1, wherein the intra prediction mode is a directional intra prediction mode, and the processor is further configured to:

decode a value of a syntax element that indicates whether the offset parameter is to be used to predict a picture comprising the video block, wherein the determination of whether to use the offset parameter to predict the video block is based on the value of the syntax element.

4. The device of claim 3, the processor is further configured to:

determine that the intra prediction mode is a non-planar mode of a plurality of candidate modes in a most probable modes (MPM) list; and

determine that a size of the video block is equal to or greater than a threshold block size, wherein the value of the syntax element is decoded based on the determination that the intra prediction mode is the non-planar mode of the plurality of candidate modes in the MPM list and based on the determination that the size of the video block is equal to or greater than the threshold block size.

5. The device of claim 1, wherein the video block is a first video block in a first picture, the intra prediction mode is a first intra prediction mode, the offset parameter is a first offset parameter, the set of prediction samples is a first set of prediction samples, and the processor is further configured to:

determine that multiple reference line (MRL) is enabled for a second video block of a second picture;

determine that the second video block is associated with a reference line;

based on an index of the reference line , obtain a second set of prediction samples for the second video block based on a second intra prediction mode that is not associated with a second offset parameter; and

decode the second video block using the second set of prediction samples.

6. The device of claim 1 or claim 2, wherein the video block is a first video block in a first picture, the intra prediction mode is a first intra prediction mode, the offset parameter is a first offset parameter, the set of prediction samples is a first set of prediction samples, and the processor is further configured to:

determine that intra subblock partitioning (ISP) is enabled for a second video block of a second picture;

obtain, via ISP, a sub-partition associated with the second video block;

based on the determination that ISP is enabled for the second video block, obtain a second set of prediction samples for the sub-partition based on a second intra prediction mode that is not associated with a second offset parameter; and

predict the sub-partition using the second set of prediction samples for the sub-partition.

7. The device of claim 1 or claim 2, wherein a value of the offset parameter varies based on at least one of a size of the video block or a maximum variation of directionality associated with intra prediction mode.

8. The device of claim 1, wherein the processor is further configured to:

determine a reference location based on the intra prediction mode and the offset parameter;

determine, based on the reference location, that an interpolation is to be used to obtain an interpolated reference sample associated with the reference location; and

determine the interpolated reference sample based on a cubic filter and a plurality of reference samples associated with video block.

9. The device of claim 1, wherein the processor is further configured to:

determine that multiple reference line (MRL) is enabled for the video block;

determine that the video block is associated with a reference line; and

based on an index of the reference line , obtain the set of prediction samples for the video block based on the intra prediction mode and the offset parameter.

10. The device of any of claims 1-9, wherein the processor is further configured to:

determine that the intra prediction mode is a positive intra prediction mode; and

refrain from performing position dependent prediction compensation (PDPC) for the video block.

11. A method for video decoding, the method comprising:

determining an intra prediction mode for a video block;

determining whether to use an offset parameter associated with the intra prediction mode to predict the video block;

obtaining the offset parameter associated with the intra prediction mode based on a determination to use the offset parameter to predict the video block;

determining a set of prediction samples for the video block based on the offset parameter and the intra prediction mode for the video block; and

decoding the video block using the set of prediction samples.

12. A method for video encoding, the method comprising:

obtaining an intra prediction mode for a video block;

obtaining an offset parameter associated with the intra prediction mode;

determining a set of prediction samples for the video block based on the offset parameter and the intra prediction mode for the video block;

predicting the video block using the set of prediction samples;

determining whether to use the offset parameter associated with the intra prediction mode to encode the video block based on the prediction of the video block; and

encoding a value of a syntax element that indicates whether to use the offset parameter associated with the intra prediction mode to decode the video block.

13. The method of claim 11, wherein the intra prediction mode is a directional intra prediction mode, further comprising: decoding a value of a syntax element that indicates whether the offset parameter is to be used to predict a picture comprising the video block, wherein the determination of whether to use the offset parameter to predict the video block is based on the value of the syntax element.

14. The method of claim 13, further comprising:

determining that the intra prediction mode is a non-planar mode of a plurality of candidate modes in a most probable modes (MPM) list; and

determining that a size of the video block is equal to or greater than a threshold block size, wherein the value of the syntax element is decoded based on the determination that the intra prediction mode is the non-planar mode of the plurality of candidate modes in the MPM list and based on the determination that the size of the video block is equal to or greater than the threshold block size.

15. The method of claim 11, wherein the video block is a first video block in a first picture, the intra prediction mode is a first intra prediction mode, the offset parameter is a first offset parameter, and the set of prediction samples is a first set of prediction samples, further comprising:

determining that multiple reference line (MRL) is enabled for a second video block of a second picture;

determining that the second video block is associated with a reference line;

based on an index of the reference line, obtaining a second set of prediction samples for the second video block based on a second intra prediction mode that is not associated with a second offset parameter; and

decoding the second video block using the second set of prediction samples.

**FIG. 1**

FIG. 2

**FIG. 3**

FIG. 4

**FIG. 5**

EP 4 730 771 A1

**FIG. 6**

EP 4 730 771 A1

**FIG. 7**

EP 4 730 771 A1

Shift

Top reference array

Left reference array

prediction direction

Reference pixels

Pixels to be predicted

**FIG. 8**

FIG. 9

FIG. 10

Europäisches
Patentamt
European
Patent Office
Office européen
des brevets

# EUROPEAN SEARCH REPORT

**Application Number**

EP 24 30 6760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/277960 A1 (TENCENT AMERICA LLC [US]) 5 January 2023 (2023-01-05) | 1-5,7-9, 11-15 | INV. H04N19/105 |
| A | * paragraph [0014] - paragraph [0149] * ----- | 6,10 | H04N19/11 H04N19/117 |
| X | WO 2024/133776 A2 (INTERDIGITAL CE PATENT HOLDINGS SAS [FR]) 27 June 2024 (2024-06-27) * paragraph [0014] - paragraph [0267] * ----- | 1,2,6, 10-12 | H04N19/159 H04N19/176 H04N19/463 H04N19/593 H04N19/70 |
| X | WO 2024/169943 A1 (DOUYIN VISION CO LTD [CN]; BYTEDANCE INC [US]) 22 August 2024 (2024-08-22) * paragraph [0003] - paragraph [0302] * ----- | 1,2,6, 10-12 | |
| X | CN 118 402 232 A (BEIJING DAJIA INTERCONNECTION INFORMATION TECH CO LTD) 26 July 2024 (2024-07-26) * paragraph [0003] - paragraph [0287] * ----- | 1,2,6, 10-12 | |

**TECHNICAL FIELDS SEARCHED (IPC)**

H04N

The present search report has been drawn up for all claims

| Place of search | Date of completion of the search | Examiner |
|---|---|---|
| Munich | 17 March 2025 | Cyranka, Oliver |

EPO FORM 1503 03.82 (P04C01)

## ANNEX TO THE EUROPEAN SEARCH REPORT
## ON EUROPEAN PATENT APPLICATION NO.

EP 24 30 6760

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | | Publication date | Patent family member(s) | | | Publication date |
|---|---|---|---|---|---|---|---|
| WO 2023277960 | A1 | | 05-01-2023 | EP | 4179726 | A1 | 17-05-2023 |
| | | | | JP | 7540082 | B2 | 26-08-2024 |
| | | | | JP | 2023543591 | A | 17-10-2023 |
| | | | | JP | 2024161467 | A | 19-11-2024 |
| | | | | KR | 20230048544 | A | 11-04-2023 |
| | | | | US | 2023007299 | A1 | 05-01-2023 |
| | | | | WO | 2023277960 | A1 | 05-01-2023 |
| WO 2024133776 | A2 | | 27-06-2024 | NONE | | | |
| WO 2024169943 | A1 | | 22-08-2024 | NONE | | | |
| CN 118402232 | A | | 26-07-2024 | CN | 118402232 | A | 26-07-2024 |
| | | | | EP | 4458013 | A1 | 06-11-2024 |
| | | | | US | 2024348777 | A1 | 17-10-2024 |
| | | | | WO | 2023129744 | A1 | 06-07-2023 |

EPO FORM P0459

For more details about this annex : see Official Journal of the European Patent Office, No. 12/82